# EUROPEAN PATENT APPLICATION

(11) **EP 2 472 107 A2**
(43) Date of publication of application: **04.07.2012**
(21) Application number: 10762703.6
(22) Date of filing: 04.08.2010
(51) Int. Cl.: F03D 9/00

(54) **METHOD FOR CONTROLLING AN ENERGY CONVERSION SYSTEM**

(30) Priority: 10.08.2009 ES 200930586
(71) Applicant: Ingeteam Technology S.A., 48170 Zamudio (ES)
(72) Inventor: OLEA OREGI, Eneko, E-48170 Zamudio (Vizcaya) (ES); LÓPEZ TABERNA, Jesús, E-48170 Zamudio (Vizcaya) (ES); CÁRCAR MAYOR, Ainhoa, E-48170 Zamudio (Vizcaya) (ES)
(74) Representative: Carpintero Lopez, Francisco
(86) International application number: PCT/ES2010/070539
(87) International publication number: WO 2011/018542

(57) **Abstract**

The present invention discloses a method for controlling a back-to-back converter when disturbances are produced in the grid which limit the capacity of the converter (105) on the side of the grid to control the voltage of the DC stage (106). In that event, the solution proposed is to pass complete or partial responsibility for controlling the voltage of the DC stage (106) to the converter (104) on the side of the generator (103).

## Description

### OBJECT OF THE INVENTION

The object of the invention is a method which permits the control of a back-to-back converter when disturbances in the grid are produced which limit the capacity of the converter on the side of the grid to control the voltage of the dc stage. In that case, the solution proposed is to completely or partially pass responsibility of the voltage control of the dc stage to the converter on the side of the generator.

### BACKGROUND OF THE INVENTION

In the last few years the requirements of energy conversion equipment connected to the power grid have increased, so that the disconnection thereof and the consequent destabilisation of the grid are prevented.

A specific case of these requirements is the performance against the appearance of a dip, a dip being understood as the immediate reduction of the grid voltage and the subsequent reestablishment thereof. The appearance of a dip affects the stability of the equipment, so that in certain cases the grid connection rules are not me!. Currently, the demands are becoming greater and greater, and the connection of the system is even required against the presence of Zero Voltage Ride Through (ZVRT). The provision of reactive current to the grid is also required in these conditions.

Conventional energy conversion equipment ís formed by a back-to- back topology converter (AC-DC-AC), formed by two AC-DC converters joined to each other vía a DC stage, one of the converters being connected to a generator and the other converter being connected to the grid.

In the case of back-to-back conversion equipment, it is the converter on the side of the grid which controls the voltage of the DC stage, i. e., the control is exercised from the grid voltage.

Against situations in which disturbances in the grid voltage appear and, as a consequence, a lack of control of the operational variables is produced, such as, for example, the current, the voltage of the DC stage or the loss of power transfer capacity, the protection of the converter can lead to the disconnection thereof.

If the disturbance causes the voltage of the DC stage to increase its value towards an uncontrolled value, the state of the art proposes the inclusion of a DC chopper in the DC stage. This solution presents the drawback of burning the surplus energy instead of distributing it throughout the system.

If the disturbance causes the voltage of the DC stage to decrease its value towards a value which throws the operation of the system out of control, the current state of the art does not pro pose a valid solution.

### DESCRIPTION OF THE INVENTION

In order to resolve the previously mentioned drawbacks, the invention consists of a method for controlling a back-to-back energy conversion structure, formed by one or more AC-DC converters joined to each other via a DC stage, at least a first converter being that which regulates the voltage of the DC stage connected to the power grid and, at least, a second converter connected to a generator. Against a loss of regulation capacity of the DC stage by the first converter, caused by disturbance in the grid voltage, at least a second converter connected to the generator contributes to the control of the DC stage.

The AC-DC converters can be connected to the power grid and to the generator either directly or indirectly through, for example, connection elements, protection elements, inductors, resistors, capacitors, transformers, autotransformers or a combination thereof.

The back-to-back energy conversion structure is composed of at least two AC-DC converters connected to each other via the DC stage, forming a total AC-DC-AC structure. The AC stage and the DC stage of each converter are joined to each other through solid state switches of the IGBT, IGCT or such like types, which permit the joining or isolation of the DC stage from the phases of the AC stage in each period of commutation. The commutation orders calculated by the control of each converter permit the synthesization of the reference voltage calculated by the control of each one of them at the outlet of each converter, so that the control of the power flow is controlled through each converter or the applied pair in the generator. The control applied on each AC-DC converter can be a vectorial control or a direct control.

In most of the applications, the responsibility of regulating the voltage of the DC stage falls on the converter connected to the power grid. In this case, a disturbance in the supply voltage can cause the loss of regulation of the voltage of the DC stage. The disturbances of the grid voltage which can cause the loss of regulation of the voltage of the DC stage can be presented in the form of:
- A voltage dip, where the supply voltage suffers a sudden drop in amplitude.
- A surge where the supply voltage suffers a sudden spike in amplitude.
- A variation in the frequency of the supply voltage.
- A sudden variation in the phase of the supply voltage.
- A combination of the previous forms.

The loss of regulation capacity of the DC stage can be caused by a loss of the power transfer capacity, a voltage limitation or a current limitation of the converter connected to the power grid, as well as a combination thereof.

The elements wherefrom each AC-DC converter is formed, such as solid state switches, inductors and other electrical elements, are associated to limits of operation in voltage and current values which must be respected in order to guarantee the correct operation of the converter. The maximum output current which can be delivered to the converter must by considered by the control thereof to be able to define the maximum power limit that can flow therethrough at each moment and depends on the available voltage. In the presence of a dip in the grid voltage and against a high value of power demand by the control loop of the voltage of the DC stage, the event could be produced wherein the converter connected to the power grid, intended to control the voltage of the DC stage, does not have all of the necessary power transfer capacity available. In this case, the converter would be in a current limitation situation. This situation would lead to a lack of control of the voltage of the DC stage which, as proposed in the method proposed herein, is resolved by means of the distribution of the command or power necessary for the correct regulation of the voltage of the DC stage between the two AC-DC converters, the converter connected to the power grid and the converter connected to the generator. Depending on the operating point in which each converter finds itself, in a preferred embodiment, the distribution of the command of power necessary for the correct regulation of the voltage of the DC stage is carried out so that the converter connected to the generator takes charge a of all of that required power. This is the case suggested, for example, against a dip of 100% depth in the voltage of the grid where, as there is no supply voltage in the converter connected to the power grid, in order to guarantee the control of the voltage of the DC stage, all of the power necessary for this purpose must be regulated by the converter connected to the generator.

If the lack of control caused by the disturbance in the grid voltage manifests in the form of an increase of the voltage of the DC stage, this can be maintained within its operating limits by means of a chopper connected in the DC stage which permits the burning of the surplus energy of said stage in a resistor connected by means of a switch. If, on the other hand, the lack of control of the DC stage manifests in the form of a voltage dip, the DC chopper cannot provide any solution and if the converter on the side of the grid does not have the necessary power capacity, the situation can lead to an emergency stop due to the voltage of the DC stage evolving to dangerous values for the functioning of the system.

The control method proposed gives a solution to the situation disclosed of the uncontrolled dip in the voltage of the DC stage and also permits the minimisation, and even elimination, of the actuations of the DC chopper in the event of an uncontrolled spike of the voltage of the DC stage, preventing the burning of the surplus energy from said stage and instead being able to transform that energy in the form of kinetic energy in the generator which later could be recovered in the form of power injected into the grid, thus favouring the performance of the energy conversion structure.

In the presence of a surge in the grid, the converter connected to the power grid in charge of regulating the voltage of the DC stage may not be capable of synthesizing the necessary output voltage to control the power necessary to maintain the voltage of the DC stage regulated at its reference value. The maximum output voltage value which can be synthesized by the converter has a limit defined by the value of the voltage of the DC stage and the characteristics of the solid state switches used to connect the DC stage with the phases of the AC stage (turn-on times, turnoff times, dead times necessary between switches and other similar characteristics). In the presence of a surge, the control associated with the converter can calculate a reference voltage value lo apply to the outlet of the converter which exceeds the maximum limit which can be reached by the defined variables. In this case, the converter synthesizes the maximum voltage possible at its outlet but without being able to reach the values required by the associated control and, consequently, a lack of control of the voltage of the DC stage is produced. In this case, the converter is in a voltage limitation situation, also known as state of saturation, which can lead to an emergency stop due to the out-of-range operating evolution of critical variables such as the voltage of the DC stage of the output currents of the converters. If this event were to occur, the method presented herein commutes the control responsibility of the DC stage from the converter connected to the power grid to the converter connected to the generator, transferring the entirety of the power command necessary to control the DC stage to the converter connected to the generator, thereby permitting the maintenance of all of the operating variables within their operating ranges and permitting it to continue functioning without losing control of the converters.

The back-to-back energy conversion structure, whereto the control method presented herein can be applied, can be used in different generating topologies, such as:
- topologies based on double-feed induction generators wherein the back-to-back structures are connected directly or through elements such as inductors, resistors, capacitors, transformers or combinations thereof between the rotor of the generator and the power grid.
- complete conversion topologies also known as Full Converters (FC) wherein the back-to-back structure is connected directly or through elements such as inductors, resistors, capacitors, transformers or combinations thereof between the stator of the generator and the power grid so that all of the power generated flows through the back-to-back structure.

In a preferred embodiment, the control method presented herein proposes a distribution of the power command necessary for the control of the DC stage between the converters which form the back-to-back conversion structure, being able to partially or completely distribute the power commands depending on the operating point of each converter, and the disturbances whereto they may be submitted, between the converter connected to the power grid and which normally assume the responsibility of controlling the voltage of the dc stage and the converter connected to the generator. Having partially or completely passed on the responsibility of controlling the voltage of the DC stage to the converter connected to the generator, the converter connected to the power grid can operate by injecting or absorbing reactive current to the power grid to contribute to the maintenance of the grid voltage in order to fulfil the requirements demanded by the grid connection rules. In the event of applying this method to a double-feed topology where the generator is connected to the grid through the stator, the converter connected to the rotor of the generator can take on the responsibility of regulating the voltage of the DC stage and can also contribute to controlling the rotor variables of the generator which permit the injection or absorption of the reactive current necessary to meet the requirements demanded by the grid connection rules through the stator of the generator.

### BRIEF DESCRIPTION OF THE FIGURES

Figure 1 shows a schematic view of a double-feed induction generator (DFIG).

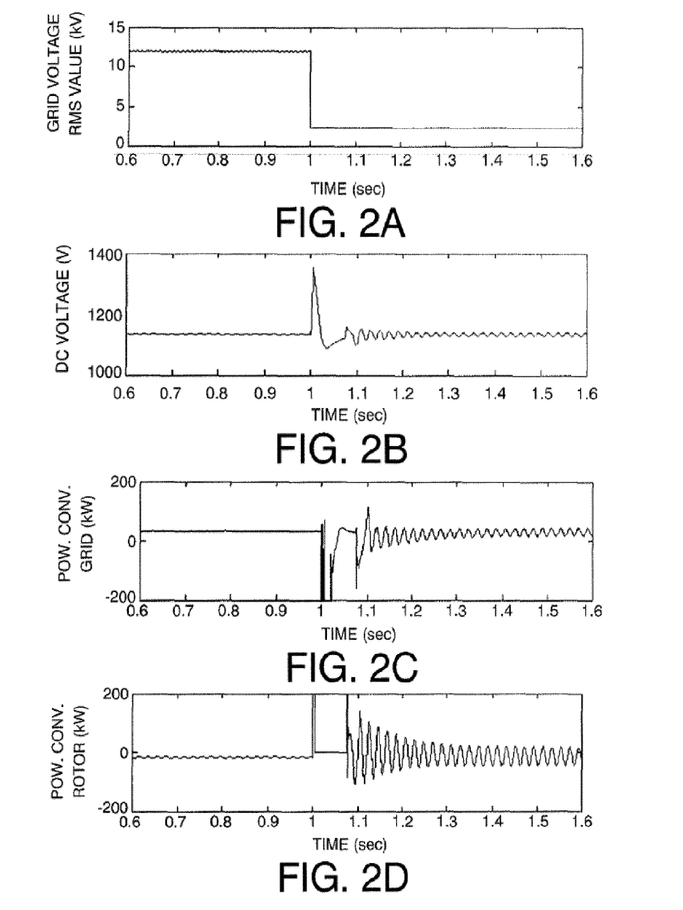

Figure 2 shows the performance of a DFIG wind-power generator against an 80% voltage dip, according to the state of the art.
Figure 3 shows the performance of a DFIG wind-power generator against a 95% voltage dip, according to the state of the art.
Figure 4 shows the performance of a DFIG wind-power generator against a 95% voltage dip, according to the invention disclosed.

### DESCRIPTION OF ONE OR SEVERAL EXAMPLES OF EMBODIMENT OF THE INVENTION

Below, a description of examples of the invention is made, citing references from the figures.

In a preferred embodiment, a back-to-back conversion structure with a converter connected to the power grid and a converter connected to the generator is considered, using the vectorial control method for the control of each converter. The vectorial control is formed by an external power regulation loop and an internal current regulation loop; the commutation orders of the sol id state switches of the converter are calculated in each task cycle of the converter from the voltage output references by the current loop and the voltage value of the DC stage provided in each stage. This information is processed and applied to the final control stage of the converter where, using vectorial or scalar modulation techniques (such as, for example, PWM), the commutation orders of the so lid state switches of each converter are established.

In order to achieve the desired evolution of the currents which permit each converter to be controlled, it is necessary to precisely establish the commutation orders of the solid state switches of the converters and to do so it is necessary to have the voltage of the DC stage regulated at its reference value.

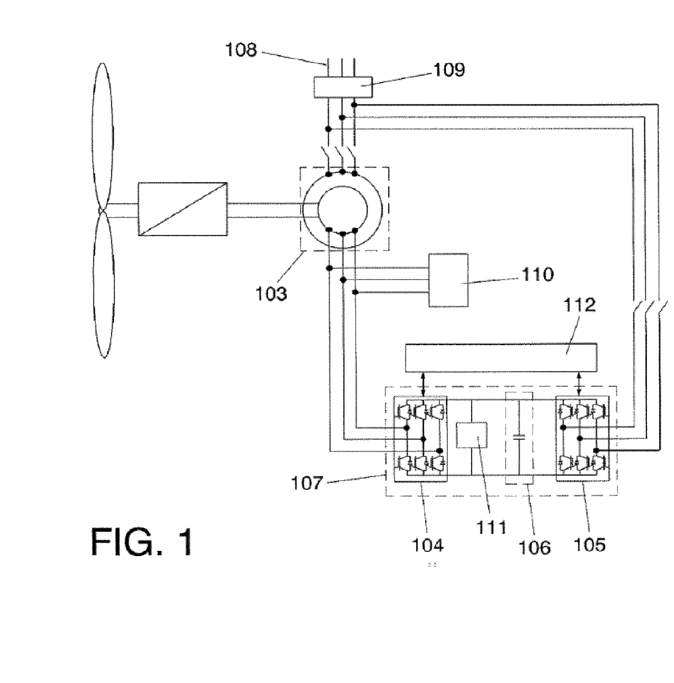

A preferred embodiment of the invention consists of the control of a wind-power generator (103) whose conversion structure (107) comprises a double-feed machine as represented in figure 1. In said structure, the stator of the generator (103) is connected to the power grid (108) through a transformer (109), and the rotor of the generator (103) is connected to an AC/DC converter (104) supplied from a DC stage (106). Conventionally, the voltage of the DC stage (106) is controlled from another AC/DC converter (105) connected to the power grid (108), capable of transferring power between the DC stage (106) and the power grid (108). The control strategy used in the state of the art implies that the converter connected to the rotor (104) regulates the active and reactive powers generated by the double-feed machine, while the converter on the side of the grid (105) regulates the voltage of the DC stage (106). The conversion structure (107) is controlled by a controller (112).

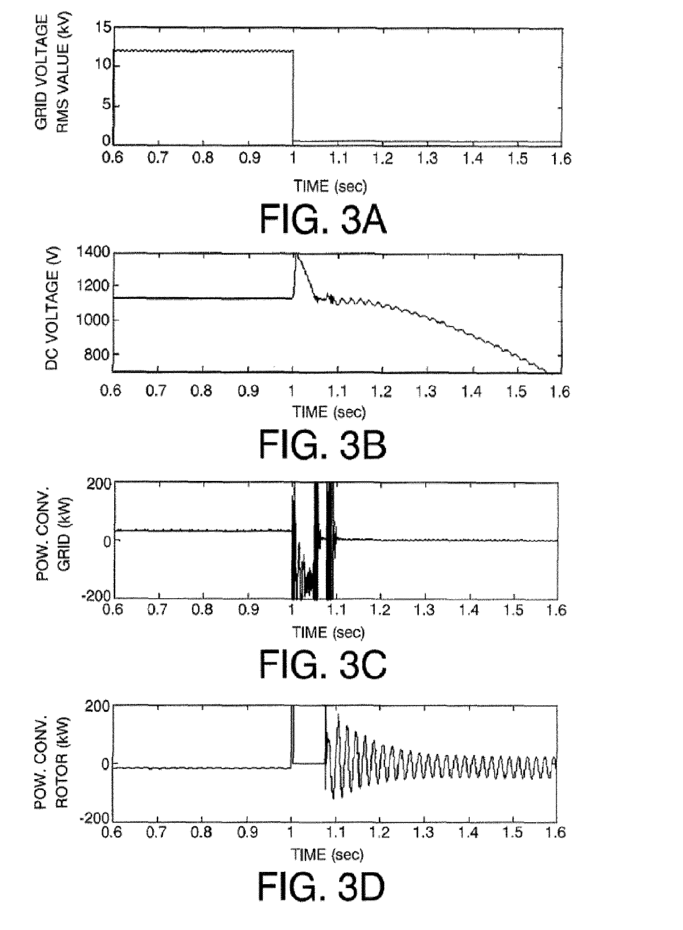

In the presence of a voltage dip, it is normal for a protection system connected to the rotor of the generator (103), and known as a crowbar (110), to be activated. This device short-circuits the phases of the rotor of the generator (103) and permits the disconnection of the converter (104) on the side of the rotor which thereby remains protected from the surge currents which habitually appear in the rotor of the generator (103). Moments later, the crowbar (110) is de-activated and the converter (104) on the side of the rotor is once again connected to the rotor, re-taking control. During this entire time, the voltage of the DC stage (106) is controlled by the converter (105) on the side of the grid, which transfers the capable of suitably regulating the voltage of the dc stage (106). The voltage is therefore left uncontrolled and, as can be observed in figure 3b, it begins to fall, mainly due to the losses of commutation which are produced in the AC-DC converters. In figure 3c, the main cause of the problem can be observed: the voltage drop of the grid (108) causes the power of the converter (105) on the side of the grid to decrease, and as it is not sufficient to cover the losses which are produced in the DC stage (106), the voltage of said stage decreases.

### Control according to the proposed invention

The lack of regulation of the dc stage (106) is corrected by using the control method proposed herein, wherein, against a voltage dip of the DC stage (106) in the grid, it is performed by the distribution between the converter (104) connected to the generator (103) and by the converter (105) connected by the power grid (108).

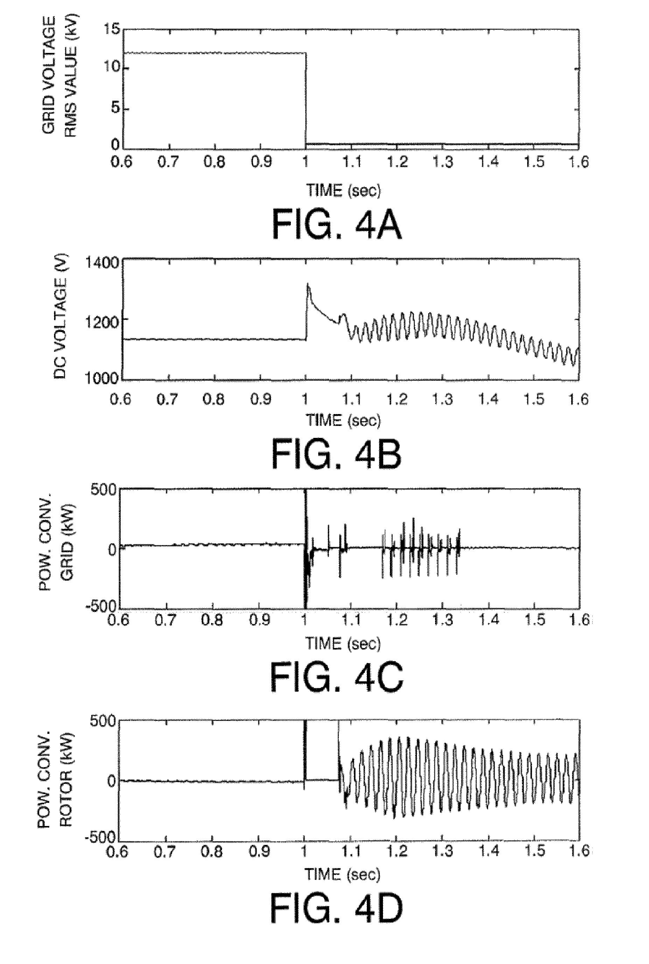

Figures 4a to 4d show the evolution of the variables using this method when, at the moment t=1s, a voltage dip of depth equal to 95% is produced. The joint use of the two converters (104, 105) makes it possible to regulate the voltage of the DC stage (106), which achieves stabilizing around its reference value as can be observed in figure 4b. Unlike the control according to the state of the art, the converter (104) on the side of the generator (103) contributes to the regulation of said voltage by introducing power to the DC stage (106). This can be observed in that the mean value of the power oscillations, shown in figure 4d, is positive.

## Claims

1. Method for controlling an energy conversion system formed by:
- at least one electric generator (103),
- at least two AC-DC converters (104, 105) joined to each other via a DC stage (106), at least a first converter (105) being connected to the power grid (108) and, at least, a second converter (104) connected to a generator (103), and where said at least first converter (105) regulates the voltage of the DC stage (106),
**characterised in that**, against a loss of regulation capability of the DC stage (106) by at least a first converter (104) caused by a disturbance in the grid voltage, at least a second converter (105) contributes to the control of the DC stage (106).

2. Method for controlling a system according to claim 1, wherein at least second converter (105) fully assumes the regulation of the DC stage (106).

3. Method for controlling a system according to either of the previous claims, wherein the voltage grid disturbance is one of the following: a voltage dip of the grid, a surge current of the grid, a variation of the grid frequency, a variation of the phase of the grid voltage, or a combination thereof.

4. Method for controlling a system according to any of the previous claims, wherein the loss of regulation capacity of the dc stage (106) is one of the following: a loss of the power transfer capacity, a voltage limitation of at least a converter on the side of the grid, a current limitation of at least a converter on the side of the grid, or a combination thereof.

5. Method for controlling a system according to any of the previous claims, wherein the generator (103) is of the double-feed type, with at least a converter (105) connected to the power grid (108) and the at least a second converter (104) connected to the rotor of the generator (103).

6. Method for controlling a system according to any of claims 1-4, wherein the generator (103) is of the full converter type.
